# EUROPEAN PATENT APPLICATION

(11) **EP 1 398 969 A1**
(43) Date of publication of application: **17.03.2004**
(21) Application number: 02714503.6
(22) Date of filing: 05.04.2002
(51) Int. Cl.: H04N 7/173, G06F 17/30, G06F 17/60

(54) **VIDEO DISTRIBUTING SYSTEM AND VIDEO DISTRIBUTING METHOD**

(30) Priority: 05.04.2001 JP 2001107145
(71) Applicant: Dentsu Inc., Chuo-ku, Tokyo 104-8426 (JP)
(72) Inventor: Miyamama, Koji, Koto-ku, Tokyo 135-6033 (JP); Suzuki, Kenichirou, Koto-ku, Tokyo 135-6033 (JP); Sanada, Hidetaka, Koto-ku, Tokyo 135-6033 (JP); Iijima, Akio, Chuo-ku, Tokyo 104-8426 (JP); Suga, Hisaya, Chuo-ku, Tokyo 104-8426 (JP); Yukawa, Tomohiko, Chuo-ku, Tokyo 104-8426 (JP)
(74) Representative: Poulin, Gérard
(86) International application number: PCT/JP2002/003447
(87) International publication number: WO 2002/082817

(57) **Abstract**

The present invention provides a video distribution system and a video distribution method that can update video data to be distributed after distributing a distribution list to a user terminal. A distribution list generating processing unit (22) generates a distribution list that includes the link name linked to the video data as a distribution request destination. The link list generating processing unit (23) generates a link list that is a correspondence list between the link name and the video data file name corresponding to the link name. The link list updating processing unit (24) updates the video data file name corresponding to the link name in the link list to another video data file name depending on the distribution conditions.

## Description

### Technical Field

The present invention relates to a video distribution system and to a video distribution method in which video data is distributed to a user terminal that can be connected to a network based on a distribution list that defines a distribution order of the video data to the user terminal.

### Background Art

Conventionally, video distribution over the Internet is carried out by a video distribution method in which a file (distribution list) that includes the distribution order and duration is delivered to the user terminal using, for example, SMIL (Synchronized Multimedia Integration Language), and at the user terminal, a plurality of video data is delivered in a time order based on the distribution file. In addition, a video distribution method has also been proposed in which the distribution list is distributed and temporarily stored in a distribution server or a server that is on the distribution path, and the plurality of video data is distributed in a time order based on a distribution list that matches the user ID.

In the case of the conventional video distribution method described above, there is the problem that after distributing the distribution list to the user terminal, because the user terminal receives video data according to the distribution list, the video data scheduled for distribution that is included in the distribution list cannot be changed to other video data.

### Disclosure of Invention

Taking into consideration the above-described problem, it is an object of the present invention to provide a video distribution system and video distribution method in which video data to be distributed can be changed after the distribution list has been delivered to the user terminal.

In order to resolve the above described problem, a video distribution system according to the present invention is a video distribution system that distributes video data to a user terminal that can be connected to a network based on a distribution list that defines a distribution order of video data to the user terminal, comprising a distribution list generating device that generates a distribution list that includes the link name that links to video data as a distribution request destination, a link list generating device that generates a link list that is a correspondence list between the link name and the video data file corresponding to this link name, and a link list updating device that updates the video data file name corresponding to the link name in the link list to another video data file name depending on distribution conditions.

A video distribution method according to the present invention is a video distribution method that distributes to a user terminal that can be connected to a network video data and a distribution list that defines a distribution order of video data to the user terminal, and comprises a step in which a distribution list that includes the link name linked to video data is generated as a distribution request destination, a step in which a link list that is a correspondence list between a link name and a video data file name corresponding to that link name is generated, and a step in which the video data file name corresponding to the link name in the link list is updated to another video data file name depending on distribution conditions.

A program according to the present invention is a computer readable program for a video distribution system which distributes a distribution list that defines the video data and the distribution order of the video data to the user terminals which can be connected to the network, comprising the steps of: generating the distribution list including a link name which is linked with the video data as a distribution request destination; generating a link list which is a corresponding list between said link name and the video data file name corresponding to said link name; and updating the video data file name corresponding to the link name in said link list to the other video data file name depending on distribution conditions.

By providing a distribution list generating device that generates a distribution list that includes the link name that links to video data as a distribution request destination, a link list generating device that generates a link list that is a correspondence list between link name and the video data file name corresponding to this link name, and a link list updating device that updates the video data file name corresponding to the link name in the link list to another video data file name depending on distribution conditions, even after distribution of the distribution list to the user terminal, video data managed with a link list can be updated to other video data. Thereby, a video distribution system can be provided that can flexibly respond to the requests of the user and the video data provider.

In the video distribution system according to the present invention, when the video data is associated with distribution condition information that includes as distribution conditions at least one of the distribution time information that designates the time and duration for distribution, distribution area information that designates the distribution area, cumulative distribution number information that limits the cumulative number of distributions, and attribute information about the user, the link list updating device may update the video data file name corresponding to the link name to a video data file name of a video data satisfying the distribution conditions included in the distribution condition information.

In the video distribution method according to the present invention, when said video data is associated with distribution condition information that includes as distribution conditions at least one of distribution time information for specifying a time or a period for distribution, distribution area information for specifying a distribution area, cumulative distribution number information for limiting the cumulative distribution number, and attribute information about the user, the updating step for updating said link list may update a video data file name corresponding to said link list name to a video data file name of a video data which satisfy the distribution condition contained in said distribution condition information.

In the program according to the present invention, when said video data is associated with distribution condition information that includes as distribution conditions at least one of distribution time information for specifying a time or a period for distribution, distribution area information for specifying a distribution area, cumulative distribution number information for limiting the cumulative distribution number, and attribute information about the user, said step of updating said link list may update the video data file name corresponding to said link name to the video data file name of a video data which satisfies the distribution conditions contained in said distribution condition information.

By constituting the video distribution system as described above, when the video data is associated with distribution condition information that includes as distribution conditions at least one of the distribution time information that designates the time and duration for distribution, distribution area information that designates the distribution area, cumulative distribution number information that limits the cumulative number of distributions, and attribute information about the user, the link list updating device updates the video data file name corresponding to the link name to a video data file name of a video data satisfying the distribution conditions included in the distribution condition information, so that it is possible to distribute to the user terminal only video data that satisfies the distribution conditions such as distribution time and distribution duration. Thereby, even in the case that there are a variety of restrictions, such as the time and duration for distribution, such as video data for an advertisement, the video distribution system can respond easily.

In the video distribution system according to the present invention, when a predetermined request information is received from the user terminal, the above-described link list updating device may update the video data file name corresponding to the link name to the video data file name corresponding to the request information.

By constituting the system as described above, because in the case in which predetermined request information is received from the user terminal, the above-described link list updating device updates the video data file name corresponding to the link name to the video data file name corresponding to the request information, in the case, for example, that a request for redistribution of video data whose distribution has already been completed is received from the user terminal as predetermined request information, the video data corresponding to the request can be distributed. Thereby, information about the response of the user to the distributed video can be obtained.

In the video distribution system according to the present invention may further comprise a video data selecting device that selects video data to be subsequently distributed based on the information about the video data that is being distributed, and the above-described link list updating device may update the video data file name corresponding to the link name to a video data file name of the video data selected by the video data selecting device.

Since the video data selecting device that selects video data to be subsequently distributed based on the information about the video data that is being distributed is further provided, and the above-described link list updating device updates the video data file name corresponding to the link name to a video data file name of the video data selected by the video data selecting device, information determined based on the video data that is being distributed can be received, video data can be selected based on this information, and can be distributed to the user terminal. Subsequent video data can thereby be distributed taking into account the video data during distribution, and video data distributed having the object such as an advertisement can be provided more effectively to a user.

In the video distribution system according to the present invention, when the above-described video data is further associated with the information about contents of the video data, a video data selecting device that selects video data to be distributed thereafter by referring to the information about the video data that is scheduled for distribution may be further provided, and the above-described link list updating device may update the video data file name corresponding to the link name to the video data file name of the video data that has been selected by the video data selecting device.

Accordingly, when the above-described video data is further associated with the information about this video data, a video data selecting device that selects video data to be distributed thereafter by referring to the information about the video data that is scheduled for distribution is further provided, and the above-described link list updating device updates the video data file name corresponding to the link name to the video data file name of the video data that has been selected by the video data selecting device, thus video data to be distributed can be changed by taking into consideration the information about the video data. Therefore, in the case in which there is video data including contents that have been determined to be undesirable for subsequent distribution in the video currently being distributed among the video data scheduled for distribution, this can be easily modified to other video data.

In the video distribution system according to the present invention, the above-described link list updating device may update the video data file name referring to the priority order list that determines the priority order in the distribution of the video data.

The above-described link list updating device thereby updates the video data file name referring to the priority order list that determines the priority order in the distribution of the video data, video data for advertisements associated with individual users can be distributed by generating the priority order list for respective users.

Another aspect of the video distribution system according to the present invention is a video distribution system which distributes video data to a user terminal that can connect to a network based on a distribution list that defines a distribution order of video data to said user terminal, comprising: a distribution list generating device for generating said distribution list including link names which link to video data or which link to the others of said distribution list as distribution request destinations; a link list generating device for generating a link list which is a correspondence list between said link name and the video data file name or a distribution list name corresponding to said link name or said distribution list name; and a link list updating device for updating the video data file name or the distribution list name corresponding to the link name in said link list to another video data file name or another distribution list name depending on distribution conditions.

Another aspect of the video distribution method according to the present invention is a video distribution method for distributing video data and a distribution list which defines the distribution order of the video data to said user terminals that can be connected to the network, wherein the video distribution method comprises the steps of: generating the distribution list that includes a video data as a distribution request destination or a link name which is linked with another distribution list; generating a link list which is a corresponding list between the link name and a video data file name or a distribution list name corresponding to the link name; updating the video data file name corresponding to the link name in said link list or the distribution file name to the other video data file name or the other distribution file name in response to the distribution condition.

Another aspect of the program according to the present invention is a computer readable program for a video distribution system which distributes video data and a distribution list that defines the distribution order of the video data to the user terminals which can be connected to the network, comprising the steps of: generating the distribution list which contains a video data as a distribution request destination or the link name that is linked with another distribution list; generating a link list which is a corresponding list between said link name and the video data file name or the distribution list name corresponding to said link name; and updating the video data name or the distribution file name corresponding to the link name in said link list to the other video data file name or the other distribution file name in response to the distribution conditions.

In addition, the above-described program may be recorded in a computer-readable recording medium.

### Brief Description of Drawings

Fig. 1 is a block diagram showing the schematic structure of the video distribution system according to a first embodiment of the present invention.
Fig. 2 is a block diagram showing the schematic structure of the video distribution server 13 according to a first embodiment of the present invention.
Fig. 3 is a flowchart showing the operation of the user terminal 10 and the video distribution system 12 according to a first embodiment of the present invention.
Fig. 4 is a flowchart showing the operation in updating the link list of the video distribution server 13 according to a first embodiment of the present invention.
Fig. 5 is a drawing showing a concrete example of a distribution list that includes link names according to a first embodiment of the present invention.
Figs. 6A and 6B are drawings showing concrete examples of the link list using the link name included in the distribution list in Fig. 5 in a first embodiment of the present invention.
Fig. 7 is a block diagram showing the schematic structure of the video distribution system 12 according to a second embodiment of the present invention.
Fig. 8 is a flowchart showing the operation of the video distribution system 12 according to a second embodiment of the present invention.
Fig. 9 is a block diagram showing the schematic structure of the video distribution system 12 according to a third embodiment of the present invention.
Fig. 10 is a drawing showing the distribution list file and the URL link list in a third embodiment of the present invention.

### Best Mode for Carrying Out the Invention

Below, the present invention will be explained by the embodiments of the invention. However, the following embodiments do not limit the scope of the claims, and not all of the combinations of characteristics explained in the embodiments are necessary as devices for reducing the present invention to practice.

First, the schematic structure of the video distribution system according a first embodiment of the present invention will be explained.

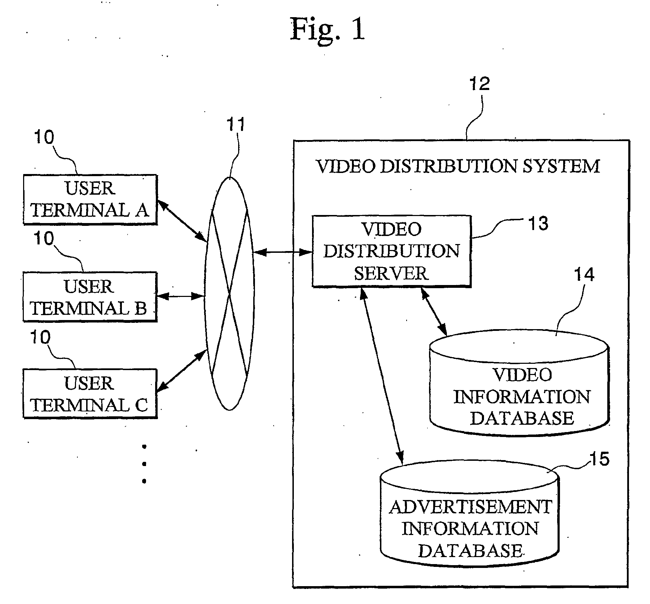

Fig. 1 is a block diagram showing the schematic structure of the video distribution system according to a first embodiment of the present invention. In the figure, reference numeral 10 denotes user terminal A, user terminal B, user terminal C, and the like (below referred to as user terminal 10) that can be connected to a network 11. Reference numeral 12 denotes a video distribution system that distributes video data to a user terminal 10 via the network 11. Reference numeral 13 denotes a video distribution server that a user terminal 10 can connect to via the network 11, reads out video data from a database that stores video data, and distributes this to the user terminal 10. Reference numeral 14 denotes a video information database that stores the video data such as a movie or television program to be delivered depending on the request of the user after associating it with a video data file name. Reference numeral 15 denotes an advertisement information database that stores the video data for advertisements to be distributed in the intervals of the distribution of video data requested by the user after associating it with a video data file name.

Here, the video data stored in the video information database 14 includes information designating the location of advertising frames into which the videos for advertisements are to be inserted, and information designating the length of time to be allotted to each advertising frame. In addition, the advertisement information database 15 stores video data for advertisements associated with distribution condition information that includes at least one of the distribution time information designating the time and duration for the distribution, distribution area information designating the area of the distribution, cumulative distribution number information that limits the cumulative number of distributions, and attribute information about the user, and the information about the video data. Moreover, in the cumulative distribution number, the cumulative number of distributions made to various types of units comprising, for example, an individual, a group, or an area, can be counted.

Moreover, the video distribution server 13 can communicate advantageously with the video information database 14 and the advertisement information database 15 using leased lines, the Internet, or the like. In addition, although not shown, at the user terminal 10, a recording medium that stores software for playing the video data in a specified format, a display that displays the video being played by the software, a speaker that outputs sound, and the like can be provided. In addition, the video distribution server 13 can distribute to the user terminal 10 video data of an actual broadcasting of sporting events received via a network 11 from a television station or the like. In addition, the user terminal 10 can be a portable terminal that can connect to the video distribution system 12 using wireless communication.

Next, the schematic structure of the video distribution server 13 will be explained referring to the drawings.

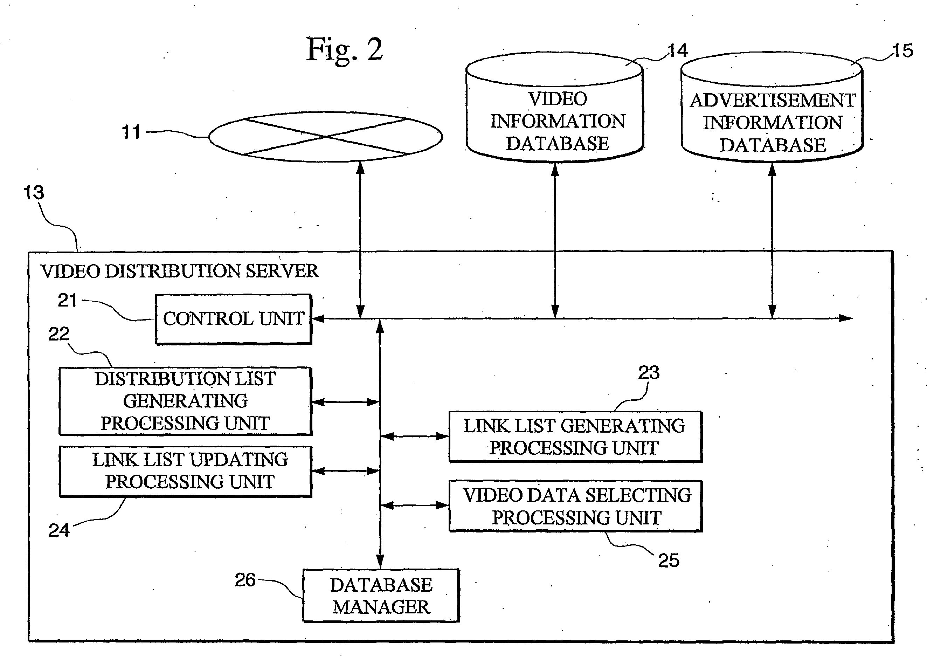

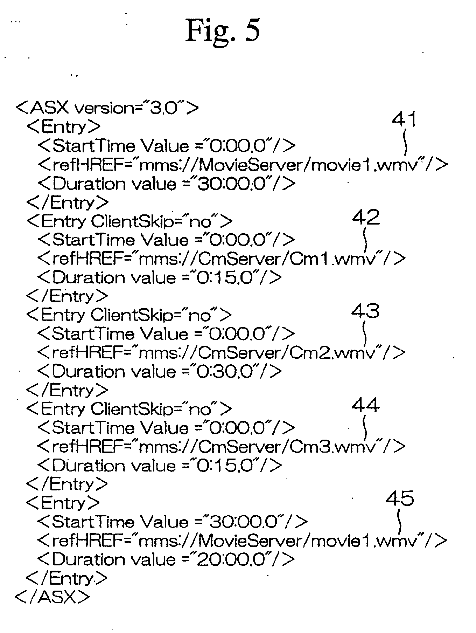

Fig. 2 is a block diagram showing the schematic structure of the video distribution server 13 according to a first embodiment of the present invention. Reference numeral 21 denotes a control unit for carrying out control in the video distribution server 13. Reference numeral 22 denotes a distribution list generating processing unit that generates distribution lists that define the distribution order of the video data to the user terminal 10, and includes the link names linked to the video data as a distribution request destination. A distribution list that includes a link name is, for example, a list such as that shown in Fig. 5. The distribution list comprises the lists 41 and 45 that designate the video data file name and the storage location (the video information database 14) of the video data, and lists 42, 43, and 44 that designate the link names (Cm1.wmv, Cm2.wmv, Cm3.wmv) and the storage location (advertisement information database 15) of the corresponding video data for advertisements. The video distribution server 13 distributes this distribution list to the user terminal 10, and the user terminal 10 requests the distribution of video data in the listed order of this distribution list. Moreover, there are cases wherein the distribution list is distributed to the user terminal 10, stored in the sending server side, or is delivered to and stored in servers that are passed through during distribution.

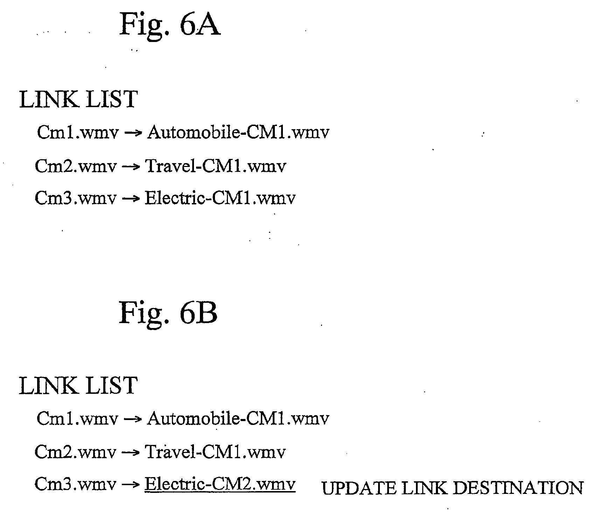

Reference numeral 23 denotes a link list generating processing unit that generates a link list that is a correspondence list between a link name and the video data file name corresponding to this link name. As an example of a link list generated by the link list generating processing unit 23, a link list using the link name listed in the distribution list shown in Fig. 5 is shown in Fig. 6A. By referring to this link list, the video distribution server 13 specifies the video data file name for an advertisement. Reference numeral 24 denotes a link list updating processing unit that updates the video data file name corresponding to the link name in the link list shown in Fig. 6A to another video data file name depending on the distribution conditions. Reference numeral 25 denotes a video data selecting processing unit that selects video data to be distributed subsequently based on the information about the video data being delivered, and selects the video data for advertisements that will be subsequently delivered referring to the information about the video data of the advertisement scheduled for distribution.

Reference numeral 26 denotes a database manager that manages the video information database 14 and the advertisement information database 15. Moreover, several of the processing units of the embodiment described above function as servers dedicated to processing, and carry out processing at each of the processing servers via a network, and an embodiment of this case will be described below as a second embodiment. In addition, the present embodiment is a video distribution system in which video data for advertisements is distributed in the intervals of the distribution of video data requested by a user, and the video data designated by the link list is video data for advertisements. Thereby, at the point in time that the video distribution commences, in the case in which video data for an advertisement that was scheduled for distribution is switched to video data for another advertisement, this switching can be easily made. The operation of the video distribution system 12 at this time will be described below.

Moreover, each of the processing units designated above can also be realized by dedicated hardware, or each of the processing units can also be constructed by memory and a CPU (central processing unit), and these functions can be realized by loading into memory and executing a program for realizing the functions of each of the processing units.

In addition, the memory described above can be formed by a hard disc apparatus, an optical magnetic disc apparatus, non-volatile memory such as flash memory, a recording medium such as a CD-ROM that can be read, a volatile memory such as RAM (Random Access Memory), or a computer readable and writable recording medium that is a combination thereof.

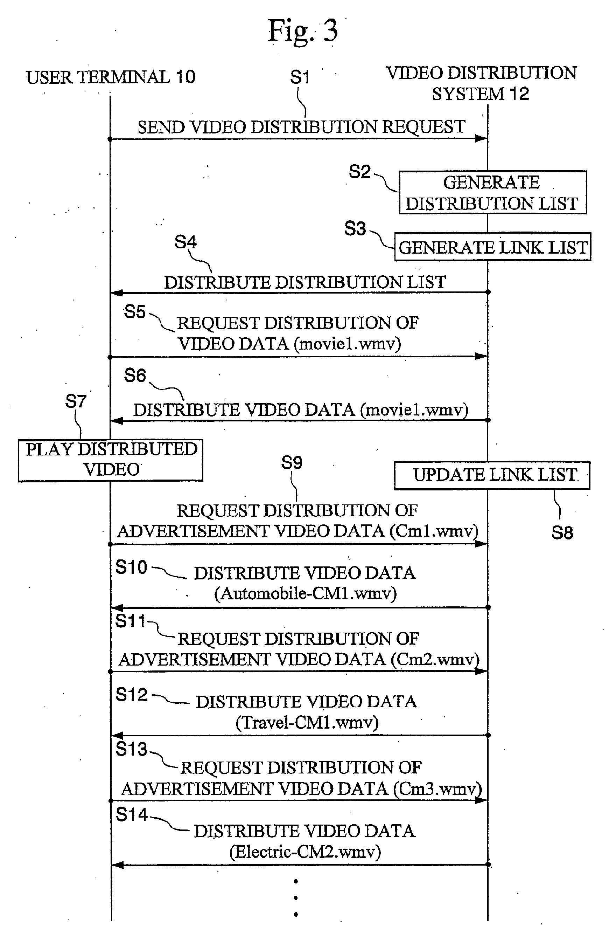

Next, the operation of the video distribution system 12 described above will be explained referring to Fig. 3, Fig. 5, Fig. 6A and Fig. 6B.

Fig. 3 is a flowchart showing the operation of the user terminal 10 and the video distribution system 12 according to a first embodiment of the present invention. First, the video distribution request from the user terminal 10 is sent to the video distribution server 13 of the video distribution system 12 (step S1). The distribution list generating processing unit 22 of the video distribution server 13 generates a distribution list such as that shown in Fig. 5 that includes the video data file name (lists 41 and 45 in Fig. 5) corresponding to the video that the user has requested (step S2). Next, the link list generating processing unit 23 generates the link list shown in Fig. 6A, which is the correspondence list between the link name (lists 42, 43, and 44 in Fig. 5) and the video data file name of the link destination (step S3).

Next, the video distribution server 13 distributes to the user terminal 10 the distribution list that includes the link name generated by the distribution list generating processing unit 22 (step S4). Next, at the user terminal 10, the distribution of video data (movie1.wmv in Fig. 5) in the order listed in this distribution list is requested (step S5). Next, the video distribution server 13 reads out the video data "movie1.wmv" from the video information database 14, and commences distribution to the user terminal 10 (step S6). The user terminal 10 receives this video data, and plays it using software corresponding to this video data (step S7). The user terminal 10 thereby displays the distributed video in the display and outputs sound by the speakers.

Here, for example, in the case in which the video data "Electric-CM1.wmv" linked to "Cm3.wmv" in Fig. 6A has reached a specified cumulative number of distribution times determined by a contract or the like, the link list updating processing unit 24 updates the link destination of "Cm3.wmv" to "Electric-CM2.wmv", as shown in Fig. 6B (step S8). The switching of the video data for advertisements is thereby carried out. Moreover, the selection of the video data for the advertisement that is to be switched is carried out by the video data selection processing unit 25 by referring to the video data from the advertisement information database 15.

Next, according to the distribution list shown in Fig. 5, the user terminal 10 requests the video distribution system 12 to distribute the video data for an advertisement (CM1.wmv) (step S9). The video distribution server 13 refers to the link list shown in Fig. 6B, and distributes to the user terminal 10 the video data "Automobile-CM1.wmv" linked to "Cm1.wmv" (step S10). Similarly, the user terminal 10 requests the video distribution system 12 to distribute the video data for an advertisement (Cm2.wmv) (step S11), and the video distribution server 13 distributes to the user terminal 10 the video data "Travel-CM1.wmv" linked to "Cm2.wmv" (step S12). Similarly, the user terminal 10 requests the video distribution system 12 to distribute the video data for an advertisement (Cm3.wmv) (step S13), and the video distribution server 13 distributes to the user terminal 10 the video data "Electric-CM2.wmv" updated in step S8 and linked to "Cm3.wmv" (step S14).

As shown above, the video distribution server 13 updates the video data file name of the link destination of the link list, and thus switching of the video data for the advertisement to be distributed to the user terminal 10 can be carried out.

Moreover, in the embodiment described above, the video data for advertisements was updated, but this is not limiting, and among the video data to be distributed to the user terminal 10, updating of any video data that can be switched during distribution is possible.

Next, the updating of the link list of the video distribution server 13 will be explained in detail referring to the figures.

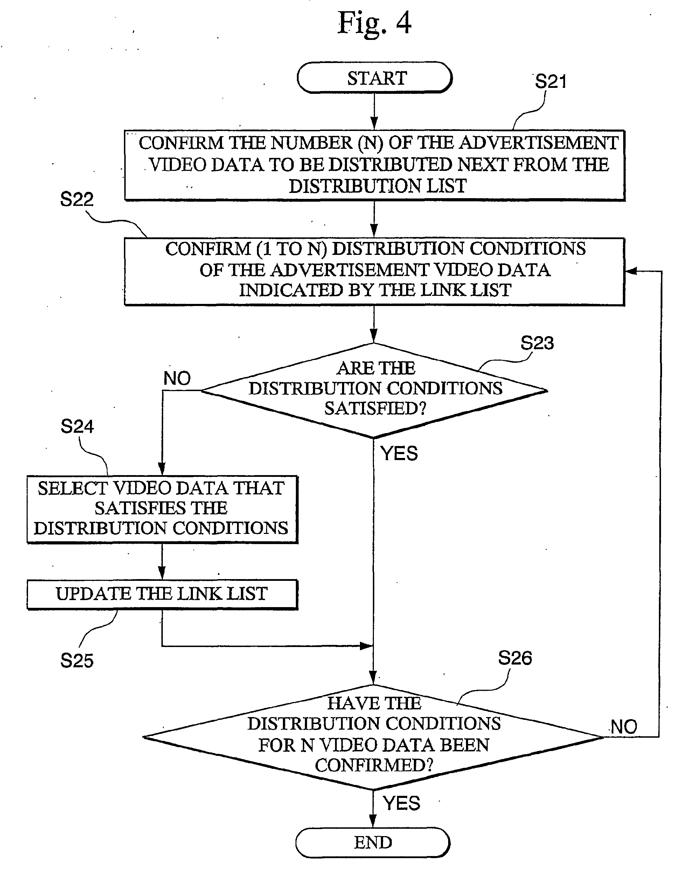

Fig. 4 is a flowchart showing the operation during the updating of the link list of the video distribution server 13 according to the first embodiment of the present invention. First, the link list updating processing unit 24 confirms the number (n) of video data for the advertisements to be distributed next from the distribution list (step S21). Next, the link list updating processing unit 24 confirms the conditions of distribution of the video data for advertisements designated by the link list by referring to the advertisement information database 15 (step S22). If the distribution conditions are satisfied (YES in step S23), the link list updating processing unit 24 determines whether the confirmation of the distribution conditions for all (n) video data for the advertisements has ended, and if it has ended (YES in step S26) the processing terminates. If confirmation has not ended (NO in step S26), it carries out confirmation of the distribution conditions for the video data for the next advertisement.

In addition, in the case in which the distribution conditions are not satisfied (NO in step S23), next the video data selection processing unit 25 refers to each of the video data for the advertisements that satisfy the distribution conditions from the advertisement information database 15, and selects the video data for advertisements that can be switched with the video data for this advertisement (step S24). The link list updating processing unit 24 updates the link list to the video data file name of the video data for the advertisement selected by the video data selection processing unit 25 (step S25).

Moreover, the timing at which the link list is updated can be m minutes before (m being a predetermined number) a scheduled time for distributing the video data for the advertisement, or updated using a method in which the video distribution server 13 periodically confirms the distribution log that shows the distribution state during distribution of the video to each of the user terminals 10, and confirms the time until the next video data distribution for the next advertisement for each user terminal 10. In addition, distribution conditions are the setting conditions that take into consideration the limits related to the distribution time and distribution duration of the video data, the setting of the maximum number for cumulative number of distribution times, the limit of the distribution area (in the case in which the location information about the user terminal 10 can be specified), and attribute information about the user (sex, age, hobbies, tastes, and the like of the user).

Here, an example of the determination method for the video data in the case in which a plurality of video data satisfies the distribution conditions is shown. Referring to the distribution conditions described above, a priority order list that sets the priority order for the video data that can be distributed is generated for each user, and referring to this priority order list, the link list updating processing unit 24 can update the link list. In addition, in the case in which the link list generating processing unit 23 generates a link list as well, the link list can be generated by referring to the priority order list. The generating and updating of the link list can thereby be automated, and the generation of link lists corresponding to each individual can easily be carried out. Furthermore, the generating and updating of the link list can be carried out by selecting from a plurality of link lists generated in advance, not only from individual video data.

In addition, the decision in step S23 can also determine whether or not the predetermined requested information (for example, when video data for an advertisement is clicked during distribution, the requested information that requests the redistribution of video data for the advertisement is sent) has been received from the user terminal 10, or can determine whether or not the request information (for example, requested information determined based on a win or loss during a sporting event broadcast or the like) determined based on the video data during distribution has been received, in addition to determining whether or not the distribution conditions are satisfied. Thereby, the video distribution server 13 can receive a variety of requests and distribute video data reflecting these requests.

Next, as a second embodiment of the present invention, a video distribution system using a plurality of servers will be explained referring to the figures.

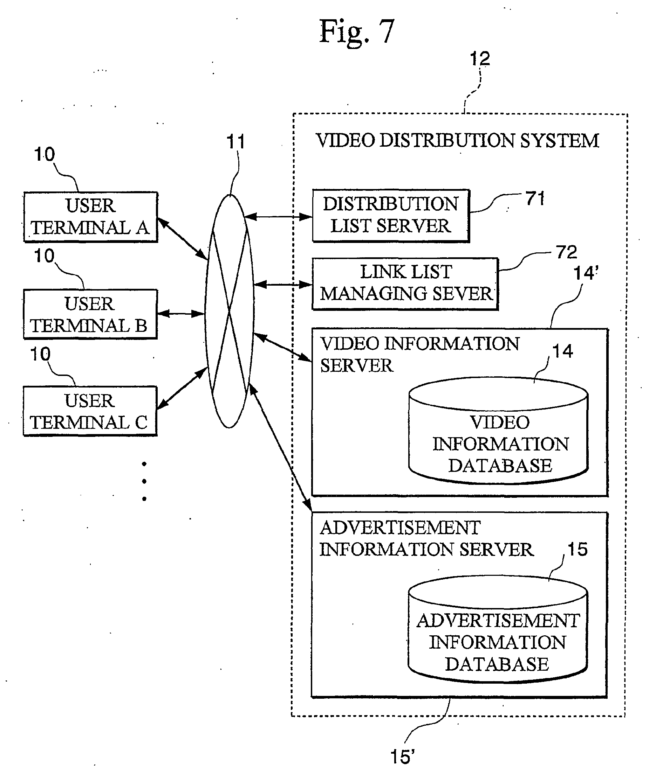

Fig. 7 is a block diagram showing the schematic structure of the video distribution system 12 according to a second embodiment of the present invention. Reference numeral 14' denotes a video information server that provides a video information database 14 and distributes video data desired by the user to the user terminal 10. Reference numeral 15' denotes an advertisement information server that provides an advertisement information database 15, and distributes video data for advertisements to the user terminal 10. Reference numeral 71 denotes a distribution list server (distribution list generating device) that receives requests for the video distribution from the user terminal 10 and generates a distribution list. Reference numeral 72 denotes a link list managing server (link list generating device, link like updating device) that generates a link list by referring to the advertisement information database 15 provided by the advertisement information server 15', and manages each of the generated link lists.

The operation of the video distribution system 12 described above will be explained referring to the figures.

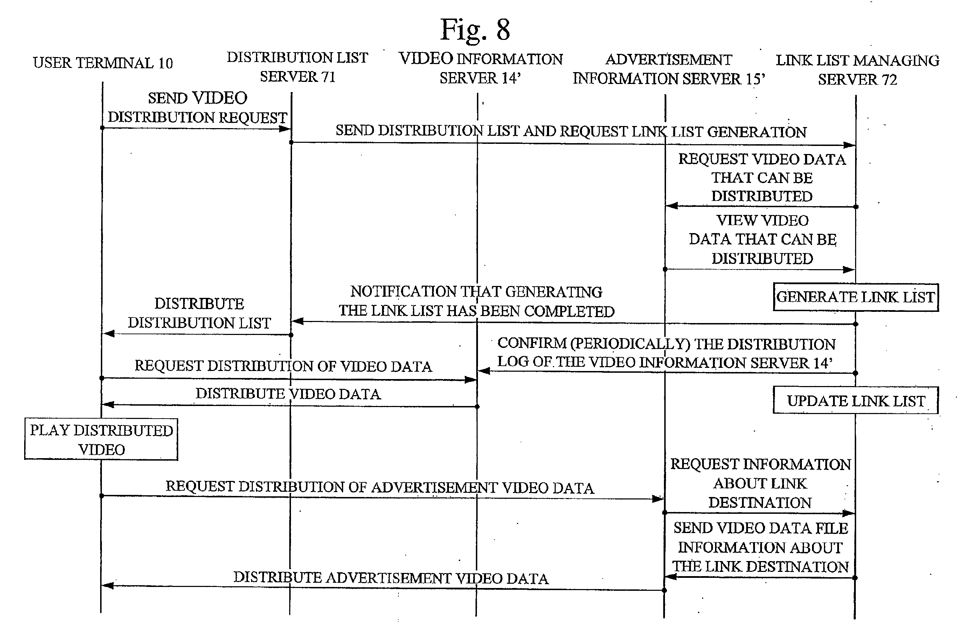

Fig. 8 is a flowchart showing the operation of the video distribution system 12 according to the second embodiment of the present invention. First, the user terminal 10 sends the request for video distribution to the distribution list server 71. This request is received, the distribution list server 71 generates a distribution list, and sends this distribution list and the request for link list generation to the link list managing server 72. Next, the link list managing server 72 requests information related to the video data for advertisements that can be delivered to the advertisement information server 15'. The request is received, and the advertisement information server 15' sends to the link list managing server 72 the information related to the video data for advertisements that can be distributed taking into account the distribution conditions.

Next, the link list managing server 72 generates a link list comprising the link name included in the distribution list and the corresponding video data file name for an advertisement by referring to information related to video data for advertisements that can be distributed. Next, the link list managing server 72 notifies the distribution list server 71 that generation of the link list has been completed. The distribution list server 71 that has received this notification distributes to the user terminal 10 the distribution list generated by the link list. In addition, in order for the link list managing server 72 to calculate the timing for updating the link list, the video information server 14' periodically confirms the distribution log that shows the distribution state during distribution of the video to the user terminal 10. Thereby, the distribution log is managed and this distribution log serves as information for carrying out determination of video data updates. If updating the video data is necessary, the link list managing server 72 carries out updating of the link list.

At the user terminal 10, a request for distribution of video data is made to the video information server 14' based on the received distribution list. The video information server 14' reads out the video data from the video information database 14 based on this request, and distributes it to the user terminal 10. Thereby, the video data is distributed to the user terminal 10, and the distributed video is played. Next, depending on the distribution list, in the case in which the user terminal 10 requests the advertisement information server 15' to distribute video data for an advertisement, the advertisement information server 15' requests the link list managing server 72 for information about the link destination. This request is received, and the link list managing server 72 sends the information related to the video data file name of the link destination to the advertisement information server 15'. The advertisement information server 15' reads out the video data for an advertisement of the video data file name from the advertisement information database 15, and distributes this to the user terminal 10.

The video distribution system 12 thereby distributes video data that the user desires and video data for advertisements that is inserted between the playing of the video data to the user terminal 10. In addition, as shown in Fig. 3, in the operation of the flow of the video distribution system 12 subsequent to Fig. 8, the link list is updated as appropriate and the video data for an advertisement is distributed that satisfies distribution conditions and further takes into account individual attributes.

Moreover, the data to be distributed is not limited to video data, but can be appropriately applied to sound data and music data distributed via the Internet. In addition, in order to respond to individual requests from user terminals 10, information related to each of the user terminals 10 associated with the IP address of each of the user terminals 10 and the like can be stored.

Next, as a third embodiment of the present invention, a video distribution system in which there is a plurality of the advertisement information servers 15' in the second embodiment described above will be explained referring to the figures.

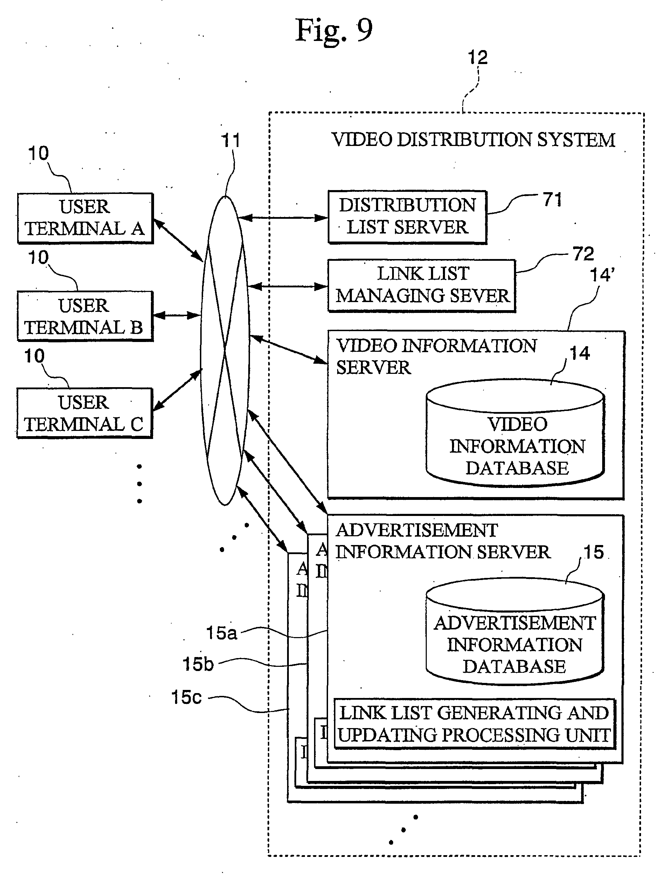

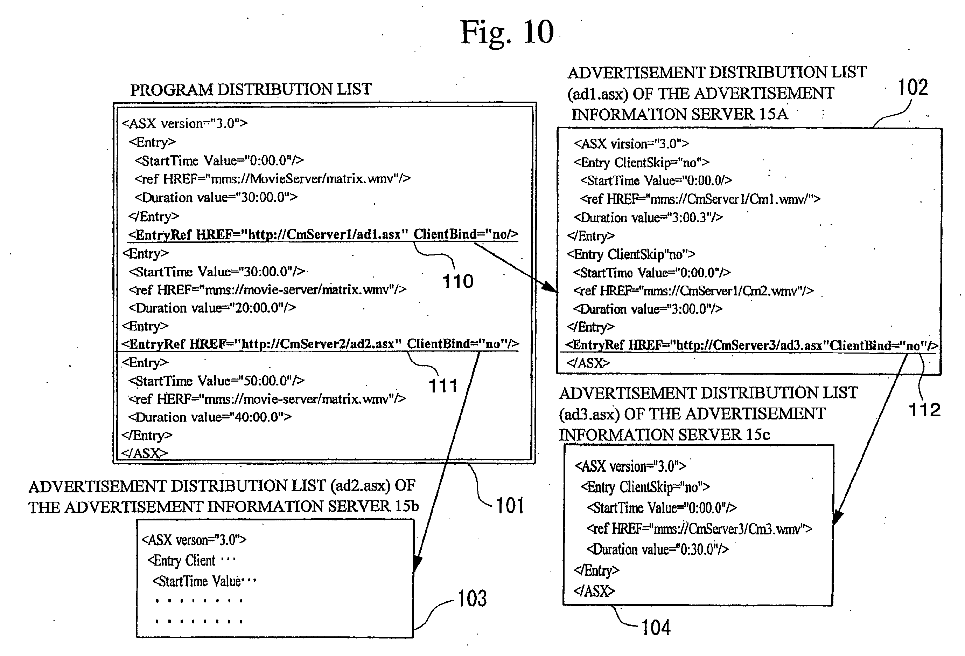

Fig. 9 is a block drawing showing the schematic structure of the video distribution system 12 according to a third embodiment of the present invention. Reference numerals 15a, 15b, 15c, ..., denote a plurality of advertisement information servers that each provide an advertisement information database 15, and distribute video data for advertisements to user terminals 10. As shown in Fig. 10, the link list managing server 72 generates a distribution list 101 that includes lines 110 and 111 (serving as the URL link list) that designate the distribution list file that each of the plurality of advertisement information servers 15a, 15b, 15c, ..., maintain. In the case in which the distribution list file that the advertisement information server 15a maintains is the advertisement distribution list 102 shown in Fig. 10, the owner of the advertisement information server 15a can thereby freely control the distribution of advertising videos within a given time frame.

In addition, as shown in line 112 of the advertisement distribution list 102, by designating the distribution list 104 maintained by another advertisement information server 15c, a constant time frame can be provided to the advertisement information server 15c. As shown above, the listing of the URL link list can be the location of the distributed list file that controls the distribution of the video data for advertisements, not just the location of the video data file for advertisements. In addition, a separate distribution list file among these distribution list files can be linked.

In addition, as shown in line 111 of the distribution list 101 in Fig. 10, in a separate advertisement frame, an advertisement information server that distributes other video data for an advertisement can be designated.

As has been explained above, by making the link destination in the link list maintain a variety of advertisement information servers that include URLs, the sales of the advertisement frames becomes freer and more simple.

In the above-described embodiment shown in Fig. 7, a description has been provided that the user terminal 10 receives a video data from the video distribution server 14' based on the distribution list and, while playing the video data, the user terminal 10 also receives video data for advertisement from the advertisement information server 15' and plays the video data for advertisement. However, the present invention is not limited to the above-described embodiment, but the variants can be envisaged. For example, when the user terminal 10 access to the web server for playing the web contents, it is possible to send to the user terminal 10 the web contents including a distribution list for playing the video data for advertisement in a part of the web content or in the other window. The video data for advertisement defined by the distribution list can thereby be played in a part of the web content display or in the other window display.

In addition, a program for realizing the functions of the processing units that carry out each of the types of processes in Fig. 2 can be stored on a computer readable recording medium, and each of the processes can be carried out by a computer system reading and executing the program recorded on this recording medium. Moreover, "computer system" includes the OS and hardware such as peripheral devices.

In addition, in the case in which the WWW system is used, "computer system" includes environments that provide home pages (or a display environment).

In addition, "computer readable recording medium" includes portable media such as flexible discs, magneto-optic discs, ROMs, CD-ROMs or the like, and memory devices such as a hard drive built into a computer system. Furthermore, "computer readable recording medium" includes devices that temporarily store a program such as the volatile memory (RAM) in a computer system comprising servers and clients in the case that a program is sent via a communication line such as a network such as the Internet or a telephone line.

In addition, the above-described program can be transmitted to another computer system from the computer system storing this program in a memory device and the like via a transmission medium or by a carrier wave through a transmission medium. Here, the "transmission medium" that transmits the program is a medium having the function of transmitting information such as a network (communication network) such as the Internet or a communication line (telecommunication line) such as a telephone line.

In addition, the above-described program can be for realizing a part of the functions described above. Furthermore, the above-described program can realize the above-described functions with a program already stored in the computer system, that is, as a difference file (difference program).

The above embodiments of the present invention has been explained in detail referring to the figures, but the specific structure is not limited by these embodiments, and includes designs within a scope that does not depart from the spirit of this invention.

### Industrial Applicability

According to the present invention, even after distribution of the distribution list to the user terminal, video data managed with a link list can be updated to other video data. Thereby, a video distribution system can be provided that can flexibly respond to the requests of the user and the video data provider.

In addition, according to the present invention, it is possible to distribute to the user terminal only video data that satisfies the distribution conditions such as distribution time and distribution duration. Thereby, even in the case that there are a variety of restrictions, such as the time and duration for distribution, such as video data for an advertisement, the video distribution system can respond easily.

In addition, according to the present invention, in the case, for example, that a request for redistribution of video data whose distribution has already been completed is received from the user terminal as predetermined request information, the video data corresponding to the request can be distributed. Thereby, information about the response of the user to the distributed video can be obtained.

In addition, according to the present invention, information determined based on the video data that is being distributed can be received, video data can be selected based on this information, and can be distributed to the user terminal. Subsequent video data can thereby be distributed taking into account the video data during distribution, and video data distributed having the object such as an advertisement can be provided more effectively to a user.

In addition, according to the present invention, video data to be distributed can be changed by taking into consideration the information about the video data. Therefore, in the case in which there is video data including contents that have been determined to be undesirable for subsequent distribution in the video currently being distributed among the video data scheduled for distribution, this can be easily modified to other video data.

## Claims

1. A video distribution system that distributes video data to a user terminal which can connect to a network based on a distribution list that defines a distribution order of video data to said user terminal, comprising:
a distribution list generating device that generates said distribution list that includes the link name that links to video data as a distribution request destination;
a link list generating device that generates a link list that is a correspondence list between said link name and the video data file name corresponding to said link name; and
a link list updating device that updates the video data file name corresponding to the link name in said link list to another video data file name depending on distribution conditions.

2. A video distribution system according to claim 1 wherein, in the case in which said video data is associated with distribution condition information that includes as said distribution conditions at least one of the distribution time information that designates the time and duration for distribution, distribution area information that designates the distribution area, cumulative distribution number information that limits the cumulative number of distributions, and attribute information about the user,
said link list updating device updates the video data file name corresponding to said link name to a video data file name of a video data satisfying the distribution conditions included in said distribution condition information.

3. A video distribution system according to claim 1 wherein, in the case in which predetermined request information is received from said user terminal, said link list updating device updates the video data file name corresponding to the link name to said video data file name corresponding to said request information.

4. A video distribution system according to claim 1, wherein a video data selecting device that selects video data to be subsequently distributed based on the information about the video data that is being distributed is further provided; and
said link list updating device updates the video data file name corresponding to said link name to a video data file name of the video data selected by said video data selecting device.

5. A video distribution system according to claim 1 wherein, in the case in which said video data is further associated with the information about said video data, further comprising:
a video data selecting device that refers to said information about the video data that is scheduled for distribution and selects video data to be distributed thereafter; and
said link list updating device updates the video data file name corresponding to the link name to said video data file name of the video data that has been selected by said video data selecting device.

6. A video distribution system according to claim 1 wherein said link list updating device updates the video data file name by referring to the priority order list that determines the priority order in the distribution of the video data.

7. A video distribution system that distributes video data to a user terminal that can connect to a network based on a distribution list that defines a distribution order of video data to said user terminal, comprising:
a distribution list generating device for generating said distribution list including link names which link to video data or which link to the others of said distribution list as distribution request destinations;
a link list generating device for generating a link list which is a correspondence list between said link name and the video data file name corresponding to said link name or said distribution list name; and
a link list updating device for updating the video data file name or the distribution list name corresponding to the link name in said link list to another video data file name or another distribution list name depending on distribution conditions.

8. A video distribution method for distributing to a user terminal that can be connected to a network video data and a distribution list that defines a distribution order of video data to the user terminal, comprises the steps of:
generating said distribution list that includes the link name linked to video data as a distribution request destination;
generating a link list that is a correspondence list between said link name and a video data file name corresponding to that link name; and
updating the video data file name corresponding to the link name in said link list to another video data file name depending of distribution conditions.

9. A video distribution method according to claim 8 wherein, when said video data is associated with distribution condition information that includes at least one of distribution time information for specifying a time or a period as a distribution condition, distribution area information for specifying a distribution area, cumulative distribution number information for limiting the cumulative distribution number, and attribute information about the user,
said updating step for updating said link list updates a video data file name corresponding to said link name to a video data file name of a video data which satisfy the distribution condition contained in said distribution condition information.

10. A video distribution method for distributing video data and a distribution list which defines the distribution order of the video data to said user terminals that can be connected to the network, wherein the video distribution method comprises the steps of:
generating said distribution list that includes a video data as a distribution request destination or a link name which is linked with another distribution list;
generating a link list which is a corresponding list between said link name and a video data file name or a distribution list name corresponding to said link name;
updating the video data file name corresponding to the link name in said link list or the distribution file name to the other video data file name or the other distribution file name in response to the distribution condition.

11. A computer readable program for a video distribution system which distributes a distribution list that defines the video data and the distribution order of the video data to the user terminals which can be connected to the network, comprising the steps of:
generating said distribution list including a link name which is linked with the video data as a distribution request destination;
generating a link list which is a corresponding list between said link name and the video data file name corresponding to said link name; and
updating the video data file name corresponding to the link name in said link list to the other video data file name depending on distribution conditions.

12. A program according to claim 11, wherein, when said video data is associated with distribution condition information that includes at least one of distribution time information for specifying a time or a period as a distribution condition, distribution area information for specifying a distribution area, cumulative distribution number information for limiting the cumulative distribution number, and attribute information about a user, said step of updating said link list updates the video data file name corresponding to said link name to the video data file name of a video data which satisfies the distribution conditions contained in said distribution condition information.

13. A computer readable program for a video distribution system which distributes a distribution list that defines the video data and the distribution order of the video data to the user terminals which can be connected to the network, comprising the steps of:
generating said distribution list which contains a video data as a distribution request destination or the link name that is linked with another distribution list;
generating a link list which is a corresponding list between said link name and the video data file name or the distribution list name corresponding to said link name; and
updating the video data file name or the distribution file name corresponding to said link name in said link list to the other video data file name or the other distribution file name in response to the distribution conditions.
